# DEMANDE DE BREVET EUROPEEN

(11) **EP 3 918 913 A1**
(43) Date de publication de la demande: **08.12.2021**
(21) Numéro de dépôt: 20177674.7
(22) Date de dépôt: 01.06.2020
(51) Int. Cl.: A01K 15/00, A01K 29/00, A01K 7/00

(54) **PROCEDE ET DISPOSITIF DE SURVEILLANCE DE PRISE D'ALIMENTATION ET D'EAU D'UN ANIMAL**

(71) Demandeur: Ceva Santé Animale, 33500 Libourne (FR)
(72) Inventeur:
(74) Mandataire: Plasseraud IP

(57) **Abrégé**

La présente invention concerne un procédé de surveillance de l'alimentation et de la consommation en eau d'un bovin tel qu'une vache. Selon l'invention, au moyen d'au moins un capteur transporté par ledit bovin, détecter la présence d'eau et/ou de nourriture dans une zone située au niveau du museau de cet animal et extérieure au corps de cet animal, pour identifier une prise de nourriture ou d'eau par ce bovin.

## Description

### Domaine technique

La présente invention concerne un procédé de surveillance de l'alimentation et de la consommation en eau d'un animal tel qu'une vache.

Elle concerne encore un dispositif de surveillance de l'alimentation et de la consommation en eau d'un tel animal.

### Technique antérieure

Il est connu que les bovins, notamment les vaches laitières, boivent quotidiennement de grandes quantités d'eau.

Dans une exploitation, la quantité d'eau bue par une vache laitière dépend directement du taux de matière sèche de sa ration alimentaire, de son âge, de la température extérieure et du stade de production de lait.

A chaque prise, l'ingestion en eau par une vache adulte peut ainsi être comprise en dix (10) et vingt (20) litres sachant qu'une vache laitière haute productrice peut boire de cent cinquante litres (150 l) à deux cent cinquante litres (250 l) par jour.

Alors que des vaches laitières peuvent passer de quatre (4) à cinq (5) heures par jour à manger, elles ne passent seulement que vingt (20) à trente (30) minutes par jour à boire.

Pour assurer une bonne hydratation des bovins, ces derniers doivent donc avoir accès à des abreuvoirs en nombre suffisant et avec un débit suffisant pour éviter tout phénomène de compétition susceptible de freiner la consommation de certains animaux, ces abreuvoirs étant nettoyés régulièrement pour fournir une eau de qualité.

Il est également nécessaire que cette eau potable soit régulièrement contrôlée quant à sa qualité bactériologique et fournie à une température adéquate, de préférence comprise entre 5°C et 15°C, été comme hiver.

De préférence, ces abreuvoirs sont maintenus à niveau contant pour permettre aux bovins de mettre leur mufle dans l'eau et d'ingérer ainsi plus rapidement la quantité d'eau requise.

On constate une certaine adaptation de ces animaux s'ils ne boivent pas les quantités d'eau nécessaires à leurs besoins vitaux et métaboliques, sans apparition de signes extérieurs susceptibles d'alerter l'éleveur.

Toutefois, ce manque d'eau conduit à des choix prioritaires au niveau du métabolisme de l'animal allant d'une réduction de la production de lait ou de viande à une fragilisation de l'animal aux maladies.

Aujourd'hui, pour s'assurer d'une hydratation convenable de ses bovins, un éleveur doit surveiller visuellement et de manière individuelle chacun d'entre eux

Il lui est également possible de contrôler certains indicateurs d'hydratation tels que l'élasticité de la peau (test du pli de peau), l'enfoncement du globe oculaire ou encore de l'humidité des muqueuses de l'animal.

Toutefois, une telle surveillance est difficilement envisageable dans un élevage avec un nombre important de bovins.

Les mêmes considérations s'appliquent pour l'alimentation d'un bovin.

Il est ainsi connu qu'une vache laitière a un besoin quotidien d'énergie qui dépend de sa production laitière, de son poids, de son statut d'embonpoint, de sa taille, de son stade de lactation et enfin de son âge (primipare vs multipare). Une vache laitière peut ainsi avoir une consommation en matière sèche qui varie entre quinze (15) et trente (30) kg par jour avec une valeur moyenne se situant autour de vingt-cinq (25) Kg par jour.

L'éleveur doit là encore veiller à ce que chaque bovin reçoive une alimentation suffisante pour couvrir ses besoins énergétiques, ce qu'il ne peut faire visuellement lorsque son élevage compte un nombre important de bovins.

On connaît des dispositifs de l'art antérieur permettant de contrôler l'alimentation d'une vache, par exemple, en détectant les mouvements de la mâchoire inférieure de l'animal liés à la rumination ou encore les bruits causés par la mastication de nourriture.
La détection des bruits liés à la déglutition de l'eau a également été proposée pour surveiller la consommation en eau d'une vache.

Ces dispositifs portatifs de l'état de l'art sont particulièrement complexes, lourds et représentent de fait une gêne certaine pour l'animal, affectant de manière sensible son bien-être.

On connaît encore des systèmes de pesée individuelle d'un animal visant à déterminer la quantité de nourriture ingérée. Toutefois, bien que très précis, ces systèmes de pesée nécessitent des installations complexes et coûteuses.

Il existe donc un besoin pressant pour une méthode et un dispositif de surveillance de l'alimentation et de la consommation en eau d'un bovin, dont la conception originale permette de surmonter les inconvénients de l'art antérieur exposés ci-dessus.

### Objet de l'invention

La présente invention vise à pallier les inconvénients de l'art antérieur en proposant un procédé de surveillance, simple dans sa conception et dans son mode opératoire, permettant de déterminer de manière fiable l'alimentation ou la consommation en eau, par un bovin ou une pluralité de bovins.

Un autre objet de la présente invention est un tel procédé pouvant être aisément mis en œuvre dans une exploitation pour surveiller un élevage de bovins.

Encore un objet de la présente invention est un tel procédé réduisant au minimum toute gêne pour l'animal ou encore mieux n'entravant pas sa liberté de mouvement.

La présente invention vise également un dispositif de surveillance tel qu'un anneau nasal, pour la mise en œuvre d'un tel procédé de surveillance, n'altérant pas le bien-être de l'animal.

### Exposé de l'invention

A cet effet, l'invention concerne un procédé de surveillance de l'alimentation et de la consommation en eau d'un bovin tel qu'une vache. Selon l'invention, au moyen d'au moins un capteur transporté par ledit bovin, détecter la présence d'eau et/ou de nourriture dans une zone située au niveau du museau de cet animal et extérieure au corps de cet animal, pour identifier une prise de nourriture ou d'eau par ce bovin.

Cette zone peut ainsi être placée à proximité immédiate du museau du bovin ou encore entourer une partie au moins du museau du bovin. A titre purement illustratif, cette zone peut s'étendre de zéro (0) cm à trente (30) cm autour d'une partie au moins du museau du bovin. Par exemple, cette zone d'espace peut être située à proximité immédiate de l'extrémité du museau, ou mufle, de ce bovin.
De manière avantageuse, cette zone peut encore être située « juste au niveau de », « à ras de » ou encore « très près » du museau de l'animal. Tel est le cas lorsque l'animal a une partie de son museau en contact avec cette eau ou nourriture.

Bien entendu, la présence d'eau ou de nourriture ayant été détectée, s'il n'est pas possible de conclure sur une prise effective de nourriture ou d'eau par ce bovin à partir de cette seule détection, par exemple parce que cette eau ou cette nourriture n'est pas située au ras du museau de l'animal, il est possible de combiner des informations provenant de capteurs différents, portés ou non par cet animal, pour identifier, de manière certaine, cette prise d'eau ou de nourriture.

Ce procédé particulièrement simple permet de détecter de manière fiable des activités consistant en la prise de nourriture ou d'eau par un bovin et d'assurer ainsi un suivi dans le temps de ces activités pour le contrôle de l'état de santé de cet animal.

Ce procédé peut notamment être utilisé pour détecter des changements ou des troubles du comportement alimentaire et de l'abreuvement chez un bovin. La constatation de tels changements ou troubles peut être un indicateur pertinent d'un changement de statut physiologique (e.g. œstrus, vêlage), d'une maladie et/ou d'une réduction du bien-être de l'animal. De plus, une baisse d'ingestion alimentaire ou d'eau peut être associée à une diminution de la production (laitière ou viandeuse).

Notons que le présent procédé est particulièrement efficace pour surveiller la consommation d'aliments qu'il s'agisse de matière sèche (capteur radar) ou d'aliments présentant généralement un taux d'humidité élevé (capteur radar et/ou capteur de détection d'eau). On observe également que lorsqu'un bovin se nourrit, son mufle et ses naseaux sont directement en contact avec l'aliment à consommer de sorte qu'un anneau nasal équipé de capteurs électroniques et porté par cet animal peut assurer la détection de nourriture ou d'eau.

Selon un mode de réalisation particulier de ce procédé de surveillance de l'alimentation et de la consommation en eau d'un bovin, ledit au moins un capteur comprenant un capteur radar, on réalise les étapes suivantes :
- émettre un signal de radar au moins dans ladite zone,
- recevoir au moins une réflexion du signal de radar provenant d'un objet situé dans ladite zone pour obtenir des données dudit au moins un objet, et
- traiter lesdites données pour déterminer la présence d'eau ou de nourriture dans ladite zone.
Un tel capteur radar permet avantageusement de déterminer la composition de chaque objet située dans cette zone et ainsi d'identifier par exemple le type de nourriture.

Selon un autre mode de réalisation particulier de ce procédé de surveillance de l'alimentation et de la consommation en eau d'un bovin, une antenne d'émission de ce capteur radar configurée pour émettre un signal de radar à bande ultralarge émet un signal de radar dans ladite zone.

Selon encore un autre mode de réalisation particulier de ce procédé de surveillance de l'alimentation et de la consommation en eau d'un bovin, ledit signal de radar est émis sous forme d'impulsions cohérentes.

Selon encore un autre mode de réalisation particulier de ce procédé de surveillance de l'alimentation et de la consommation en eau d'un bovin, ledit bovin portant un anneau nasal comportant au moins un capteur de détection d'eau placé dans la partie de cet anneau située hors des naseaux de l'animal, détecter avec ledit au moins un capteur, l'immersion de ladite partie d'anneau dans l'eau ou la présence d'eau au-delà d'une valeur seuil au niveau de l'extrémité du museau de cet animal pour identifier une prise de nourriture ou d'eau de ce bovin.
De préférence, cet anneau nasal porte le capteur de radar et ledit au moins un capteur de détection d'eau, lesquels sont distincts et espacés les uns des autres.

Selon encore un autre mode de réalisation particulier de ce procédé de surveillance de l'alimentation et de la consommation en eau d'un bovin, on réalise une ou plusieurs mesures choisies dans le groupe comprenant une mesure de la pression ambiante s'appliquant sur ladite partie de l'anneau, une mesure du niveau d'humidité à proximité de ladite partie de l'anneau, une mesure de conductivité électrique pour détecter une variation de la conductivité entre deux électrodes espacées l'une de l'autre, une mesure de capacité de l'espace séparant deux électrodes pour détecter une variation de la capacité de cet espace liée à la présence de l'eau, et une mesure de détection optique de l'eau.

Cette ou ces mesures peuvent ainsi comprendre :
- une mesure au moyen d'une jauge de pression mesurant la pression ambiante s'appliquant sur la partie de l'anneau. A titre d'exemple, lorsque le bovin consomme de l'eau dans un abreuvoir à niveau constant, la partie de cet anneau se trouve alors immergée avec la partie correspondante de l'extrémité du museau de l'animal, l'eau exerçant une pression sur cette partie d'anneau peut être détectée,
- une mesure au moyen d'un capteur d'humidité pour mesurer le niveau d'humidité à proximité immédiate de cette partie de l'anneau,
- une mesure de conductivité électrique pour détecter une variation de la conductivité électrique entre deux électrodes espacées l'une de l'autre, cette variation résultant d'un comblement de l'espace séparant ces deux électrodes par l'eau provenant d'un abreuvoir ou d'un aliment riche en eau,
- une mesure de capacité de l'espace séparant deux électrodes pour détecter une variation de la capacité de cet espace liée à la présence de l'eau, et
- une mesure de détection optique de l'eau. Une telle mesure peut être réalisée selon différentes méthodes. A titre purement illustratif, elle peut être basée sur une réflexion interne totale de la lumière. Des sources de lumière telles que des diodes électroluminescente (LEDs) et un photodétecteur sont placés à l'intérieur d'un logement dans la partie d'anneau. En présence d'eau, une partie de la lumière est réfractée par l'eau et n'est plus reflétée par la paroi de l'anneau. La quantité de la lumière reçue par le photodétecteur est réduite et la présence d'eau est ainsi détectée.
Alternativement, il peut s'agir de détecter l'interruption d'un faisceau lumineux traversant une portion transparente de la partie de l'anneau par de l'eau environnant cette partie d'anneau.

Cette ou chacune de ces mesures sont comparées avantageusement à une valeur seuil préalablement définie et la mesure correspondante est retenue uniquement lorsqu'elle est supérieure à cette valeur seuil pour éviter notamment la prise en compte de fausses mesures telles que celles résultant du dépôt sur l'anneau de fines gouttelettes d'eau liées à une brume.
Ainsi, cette valeur seuil est définie pour éliminer des mesures liées à l'état physiologique naturel de l'animal tel que l'humidité naturelle de l'extrémité du museau de l'animal et/ou d'éventuelles fausses mesures liées aux conditions atmosphériques environnant l'animal telles que la pluie ou du brouillard.

Selon un autre mode de réalisation de ce procédé de surveillance de l'alimentation et de la consommation en eau d'un bovin, on détecte également la localisation de l'animal à proximité d'un abreuvoir et/ou d'une mangeoire.
Il est ainsi possible de déterminer la position de l'animal par rapport à un point d'approvisionnement en eau ou en nourriture tel qu'en fourrage. En fonction de la méthode de détection utilisée ce positionnement de l'animal peut être relatif ou absolu.
Par exemple, il est possible de mettre en œuvre une ou plusieurs balises permettant de détecter la position de l'animal à proximité de cette ou d'au moins une de ces balises.
De manière avantageuse, on réalise une mesure de localisation de l'animal par une communication sans fil avec un lecteur de communication Bluetooth®, infrarouge ou en champ proche (NFC). L'anneau nasal comporte alors une étiquette NFC ou un badge RFID.
Ce lecteur de communication est directement placé ou implanté dans l'abreuvoir ou la mangeoire.
Alternativement, ou en supplément, l'anneau peut être équipé d'un récepteur de système de localisation mondial (GPS). Il peut encore s'agir d'un capteur optique de proximité de l'animal.
De préférence, on entend par « proximité », une localisation de l'animal à une distance inférieure à une distance seuil prédéterminée de l'objet considéré tel qu'un abreuvoir ou une mangeoire. Il peut dès lors être considéré que l'animal est au point d'abreuvement et est donc susceptible de boire, ou est au point d'alimentation et est donc susceptible de se nourrir.

Selon encore un autre mode de réalisation de ce procédé de surveillance de l'alimentation et de la consommation en eau d'un bovin, on détecte un mouvement de la tête de l'animal, notamment un abaissement de la tête de ce dernier.

Il peut ainsi être envisagé de combiner des informations pour garantir de manière absolue la prise effective de nourriture ou d'eau par un animal. Un tel mode de réalisation est particulièrement utile lorsque la fiabilité d'une des mesures pourrait être affectée par exemple par la présence de poussières importantes dans l'air ou des conditions environnementales extrêmes telles qu'une forte pluie ou encore en cas d'accumulation progressive d'eau liée à un épais brouillard.
A titre purement illustratif, des informations liées à la présence d'un animal à proximité d'un abreuvoir ou d'une mangeoire pourraient être couplées avec des mesures dudit au moins un capteur de détection d'eau ou dudit capteur radar.

Selon encore un autre mode de réalisation de ce procédé de surveillance de l'alimentation et de la consommation en eau d'un bovin, on combine les informations liées à la présence de l'animal à proximité d'un abreuvoir et/ou d'une mangeoire ainsi qu'un abaissement de la tête de l'animal pour déclencher la ou les mesures avec ledit au moins un capteur de détection d'eau ou dudit capteur radar.
On s'assure ainsi de la pertinence des mesures et d'une optimisation de la durée de la batterie embarquée dans l'anneau nasal.
Alternativement encore, les mesures pourraient être réalisées en continue lorsque l'animal est détecté comme étant présent à proximité d'un abreuvoir ou d'une mangeoire, mais seules les mesures obtenues lors de la détection que l'animal baisse sa tête seraient pris en considération.

Selon encore un autre mode de réalisation de ce procédé de surveillance de l'alimentation et de la consommation en eau d'un bovin, ledit capteur radar et/ou ledit au moins un capteur de détection d'eau présentant un mode de veille de consommation de faible énergie, chaque capteur est placé dans ce mode lorsqu'il apparaît que l'animal est au repos ou n'est pas localisé à proximité d'un abreuvoir et/ou d'une mangeoire ou encore que la tête de cet animal ne soit pas baissée vers le sol.
De manière avantageuse, un tel mode de réalisation permet de minimiser la consommation en énergie et d'optimiser la durée d'utilisation de la batterie embarquée dans le dispositif de surveillance tel qu'un anneau nasal.
Bien entendu, le capteur de mouvement de la tête de l'animal tel qu'un accéléromètre et/ou le dispositif de localisation, restent opérationnels, ou encore actifs, lorsque ledit au moins un capteur de détection d'eau et/ou ledit capteur radar sont dans leur mode de veille.

Selon encore un autre mode de réalisation de ce procédé de surveillance de l'alimentation et de la consommation en eau d'un bovin, on détecte les mouvements du museau de l'animal pour identifier une mastication d'aliments par ce dernier.
Un bovin présente un mouvement particulier de ses mâchoires lorsqu'il s'alimente, lequel peut être détecté au moyen d'un accéléromètre (3 axes). Ainsi, les mouvements de mâchoire liés à la mastication ou à la déglutition sont avantageusement détectés pour déterminer des informations sur l'activité de l'animal quant à son alimentation ou sa consommation d'eau.

Selon encore un autre mode de réalisation de ce procédé de surveillance de l'alimentation et de la consommation en eau d'un bovin, on acquiert les mesures fournies par ledit capteur radar et/ou ledit au moins un capteur de détection d'eau dans le temps pour déterminer une durée de consommation en eau ou d'alimentation de cet animal.

Selon encore un autre mode de réalisation de ce procédé de surveillance de l'alimentation et de la consommation en eau d'un bovin, lesdites mesures sont traitées par une unité centrale telle qu'un microprocesseur, portée par l'animal ou sont envoyées par un protocole de communication sans fil vers une unité centrale distante.
Dans ce dernier cas, l'anneau nasal comporte un émetteur tel qu'une antenne, pour transmettre les données mesurées à l'unité centrale distante.

Selon encore un autre mode de réalisation de ce procédé de surveillance de l'alimentation et de la consommation en eau d'un bovin, on délivre également avec ledit anneau nasal des composés actifs tels que des médicaments, des vitamines, des hormones, ...
A titre purement illustratif, le composé actif peut être de la progestérone pour une vache laitière ou encore d'autres hormones telles que GnRH ou PGF2alfa, de la mélatonine et des parasiticides.

Selon encore un autre mode de réalisation de ce procédé de surveillance de l'alimentation et de la consommation en eau d'un bovin, préalablement à la ou aux mesures, ledit animal a été identifié de manière unique.

Selon encore un autre mode de réalisation de ce procédé de surveillance de l'alimentation et de la consommation en eau d'un bovin, on estime la quantité d'eau bue, ou la quantité de nourriture ingérée, par le bovin à partir de la durée pendant laquelle l'animal, détecté comme étant placé à proximité d'un abreuvoir, ou respectivement d'une mangeoire, a conservé sa tête baissée et/ou pendant laquelle la présence d'eau ou de nourriture a été détectée et/ou pendant laquelle la déglutition ou la mastication de l'animal a été identifiée grâce à la détection du mouvement des mâchoires de l'animal.
De manière avantageuse, pour réaliser cette estimation, on peut se baser sur une quantité d'eau bue de référence, ou respectivement d'une quantité de nourriture ingérée de référence, pendant une durée T par cet animal en fonction notamment de l'âge et du poids du bovin considéré.
De préférence, à partir de ces données, on estime une quantité journalière d'eau bue ou de nourriture ingérée par le bovin.
Cette valeur étant inférieure à une valeur seuil prédéfinie pour le bovin considéré, en tenant compte de son âge et de son poids, une alerte est déclenchée.
Il pourrait également être utile de relever à distance le volume d'eau délivré à l'abreuvoir durant le temps de présence de l'animal, tel que mesuré par un compteur d'eau équipant cet abreuvoir, afin d'ajuster cette quantité d'eau bue par l'animal.

La détection du mouvement des mâchoire de l'animal peut notamment être assurée au moyen d'un accéléromètre (3 axes) lequel permet de détecter l'activité et le mouvement de la tête de l'animal.

La présente invention concerne également un dispositif de surveillance de l'alimentation et de la consommation en eau d'un bovin tel qu'une vache.
Selon l'invention, ce dispositif de surveillance est portatif et comporte :
- un capteur radar comprenant au moins :
- une antenne d'émission disposée en une première position et configurée pour émettre un signal radar dans une zone externe au corps de l'animal,
- une antenne de réception disposée en une seconde position distincte et espacée de la première position, ladite antenne de réception étant configurée pour recevoir les signaux réfléchis par un ou plusieurs objets placés dans la zone,
   et/ou
- un capteur de détection d'eau agencé pour être placé à l'extérieur du corps de l'animal lorsque ce dernier porte ledit dispositif de surveillance, ce capteur de détection d'eau étant configuré pour détecter l'immersion au moins partielle du dispositif de surveillance dans l'eau ou la présence d'eau au-delà d'une valeur seuil à l'extérieur du corps de cet animal et au niveau de l'extrémité de son museau, et
- une unité de traitement pour identifier à partir des mesures prises par ledit capteur radar et/ou ledit au moins un capteur de détection d'eau, une prise de nourriture ou d'eau par ce bovin.

De préférence, cette zone est placée à proximité immédiate du museau du bovin ou encore entourer une partie au moins du museau du bovin. A titre purement illustratif, cette zone peut s'étendre de zéro (0) cm à trente (30) cm autour d'une partie au moins du museau du bovin.
Par exemple, cette zone d'espace peut être située à proximité immédiate de l'extrémité du museau, ou mufle, de ce bovin.
De manière avantageuse, cette zone peut encore être située « juste au niveau de », « à ras de » ou encore « très près » du museau de l'animal. Tel est le cas lorsque l'animal a une partie de son museau en contact avec cette eau ou nourriture.

Selon un mode de réalisation de ce dispositif de surveillance, ledit capteur radar est placé dans un anneau nasal, un collier ou une étiquette auriculaire.

De manière avantageuse, l'intégration de l'ensemble de ce ou ces différents capteurs sur ou dans un anneau nasal rend le procédé de surveillance d'un bovin particulièrement simple et efficace.
L'animal est entièrement libre de ses mouvements et n'est pas gêné par des appareils de l'art antérieur portatifs, plus ou moins volumineux, venant contraindre sa tête ou son ventre.

Selon un autre mode de réalisation de ce dispositif de surveillance, ladite antenne d'émission est configurée pour émettre un signal de radar à bande ultralarge.
De préférence, le signal de radar est émis sous forme d'impulsions cohérentes.
A titre d'exemple, la portée exploitable du capteur de radar est comprise entre 0 et 4 m. Une précision de 1mm jusqu'à 2m de distance peut être obtenue.
L'orientation est 80° H-plane et 40° E-plane.

Selon encore un autre mode de réalisation de ce dispositif de surveillance, ledit dispositif étant un anneau nasal, ledit au moins un capteur de détection d'eau est placé dans la partie de cet anneau destinée à être située hors des naseaux de l'animal lorsque ce dernier porte cet anneau nasal, ledit au moins un capteur de détection d'eau étant configuré pour détecter l'immersion de ladite partie d'anneau dans l'eau ou la présence d'eau au-delà d'une valeur seuil à l'extérieur du corps de cet animal et au niveau de l'extrémité de son museau pour identifier une prise de nourriture ou d'eau de ce bovin.

De manière avantageuse, ce ou ces capteurs sont choisis dans le groupe comprenant une jauge de pression, un capteur d'humidité, une sonde de mesure de conductivité électrique pour détecter une variation de la conductivité entre deux électrodes espacées l'une de l'autre, une sonde de mesure de capacité de l'espace séparant deux électrodes pour détecter une variation de la capacité de cet espace et un capteur optique pour détecter la présence d'eau sur ou dans ladite partie d'anneau.
De préférence, cet anneau peut comporter plusieurs de ces éléments, lesquels sont par exemple placés dans la partie centrale du corps de l'anneau nasal.

Ce capteur optique peut être configuré pour détecter la réflexion interne totale de la lumière à l'intérieur d'une portion de l'anneau nasal ou ce capteur optique peut être configuré pour mesurer la lumière réfractée par de l'eau environnant ladite partie d'anneau.

Selon encore un autre mode de réalisation de ce dispositif de surveillance, il comporte également un accéléromètre et/ou un gyroscope et/ou un dispositif de localisation de ce dispositif de surveillance à proximité d'un abreuvoir ou d'une mangeoire.

A titre d'exemple, ce dispositif de localisation est configuré pour réaliser une communication sans fil avec un lecteur de communication Bluetooth®, infrarouge ou en champ proche (NFC).

Selon encore un autre mode de réalisation de ce dispositif de surveillance, il est configuré pour délivrer des composés actifs tels que des médicaments, des vitamines, des hormones ....

De manière plus générale, la présente invention concerne également un procédé de surveillance de l'alimentation et de la consommation en eau d'un bovin tel qu'une vache, dans lequel une prise de nourriture ou d'eau par ce bovin est identifiée au moyen d'un capteur radar porté par ledit bovin.
Un tel capteur radar permet non seulement de détecter de la nourriture ou de l'eau dans une zone dans lequel il émet un signal de radar, mais il assure également la détection de leur composition. Il permet également la détection d'aliment qui ne contiendrait pas un taux d'humidité suffisant pour être détecté par un capteur de détection d'eau.

Selon un mode de réalisation de ce procédé de surveillance de l'alimentation et de la consommation en eau d'un bovin, on réalise les étapes suivantes :
- émettre un signal de radar dans une zone,
- recevoir au moins une réflexion du signal de radar provenant d'un objet situé dans ladite zone pour obtenir des données dudit au moins un objet, et
- traiter lesdites données pour déterminer la présence d'eau ou de nourriture dans ladite zone.
De préférence, cette zone est externe au corps de l'animal.

Selon un autre mode de réalisation de ce procédé de surveillance de l'alimentation et de la consommation en eau d'un bovin, une antenne d'émission configurée pour émettre un signal de radar à bande ultralarge émet un signal de radar dans une zone placée en avant de la tête du bovin.

Selon encore un autre mode de réalisation de ce procédé de surveillance de l'alimentation et de la consommation en eau d'un bovin, ledit signal de radar est émis sous forme d'impulsions cohérentes.

Selon encore un autre mode de réalisation de ce procédé de surveillance de l'alimentation et de la consommation en eau d'un bovin, ledit capteur radar est placé dans un anneau nasal, un collier ou une étiquette auriculaire.

Dispositif de surveillance de surveillance de l'alimentation et de la consommation en eau d'un bovin comprenant un capteur de radar et une unité de traitement pour identifier à partir des mesures prises par ce capteur de radar, une consommation de nourriture ou d'eau par ce bovin.

Selon un mode de réalisation de ce dispositif de surveillance de l'alimentation et la consommation en eau d'un bovin, ce capteur radar comporte une antenne d'émission disposée en une première position et configurée pour émettre un signal radar dans une zone externe au corps de l'animal et une antenne de réception disposée en une seconde position distincte et espacée de ladite première position, ladite antenne de réception étant configurée pour recevoir les signaux réfléchis par un ou plusieurs objets placés dans cette zone.

Selon un autre mode de réalisation de ce dispositif de surveillance de l'alimentation et la consommation en eau d'un bovin, ce capteur de radar est un capteur à bande ultralarge.

Selon encore un autre mode de réalisation de ce dispositif de surveillance de l'alimentation et la consommation en eau d'un bovin, il comporte un anneau nasal, un collier ou une étiquette auriculaire comportant un logement pour recevoir ledit capteur radar.

Selon encore un autre mode de réalisation de ce dispositif de surveillance de l'alimentation et la consommation en eau d'un bovin, il comporte un ou plusieurs capteurs de détection de présence d'eau choisis dans le groupe comprenant une jauge de pression, un capteur d'humidité, une sonde de mesure de conductivité électrique pour détecter une variation de la conductivité entre deux électrodes espacées l'une de l'autre, une sonde de mesure de capacité de l'espace séparant deux électrodes pour détecter une variation de la capacité de cet espace et un capteur optique pour détecter la présence d'eau sur ou dans ledit dispositif.

Selon encore un autre mode de réalisation de ce dispositif de surveillance de l'alimentation et la consommation en eau d'un bovin, il comporte également un accéléromètre et/ou gyroscope et/ou un dispositif de localisation de ce dispositif de surveillance à proximité d'un abreuvoir ou d'une mangeoire.

### Brève description des dessins

D'autres avantages, buts et caractéristiques particulières de la présente invention ressortiront de la description qui va suivre, faite, dans un but explicatif et nullement limitatif, en regard des dessins annexés, dans lesquels:
**Fig. 1**

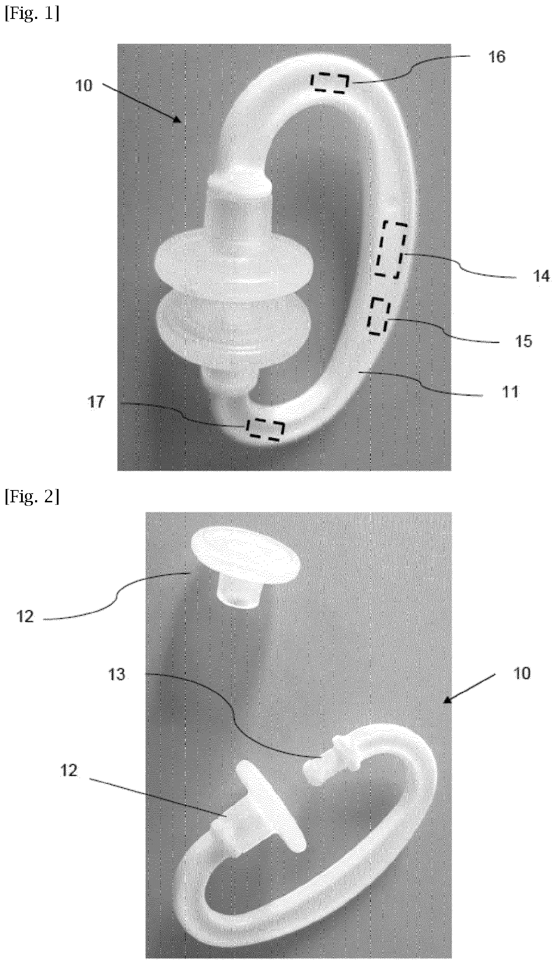

   [Fig. 1] est une vue en perspective d'un anneau nasal pour surveillance de l'alimentation et de la consommation en eau d'un bovin selon un mode de réalisation particulier de la présente invention ;
**Fig. 2**
   [Fig. 2] est une vue partiellement éclatée de l'anneau nasal de la Fig. 1 ;

### Description d'un mode de réalisation

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Tout d'abord, on note que les figures ne sont pas à l'échelle.

Les Figures 1 et 2 illustrent de manière schématique un anneau nasal 10 pour surveillance de l'alimentation et de la consommation en eau d'un bovin tel qu'une vache selon un mode de réalisation particulier de la présente invention.

Cet anneau nasal 10 comporte un corps principal 11 pouvant prendre la forme d'un segment d'ellipse ou d'une portion rectangulaire. Il est de préférence réalisé dans une matière plastique telle qu'un polymère.

Ce corps reçoit à ses extrémités des patins 12 destinés à venir prendre appui chacun contre une paroi nasale du bovin. Chaque patin 12 est avantageusement monté sur une rotule 13 pour être mobile en pivotement et s'adapter à la physionomie de l'animal.

La conception du corps de l'anneau nasal 10 permet d'enserrer ces parois nasales et d'appliquer une légère pression au moyen de ces patins 12 pour assurer le maintien en position de l'anneau.

Bien entendu, cet anneau nasal 10 pourrait présenter un autre type de fixation tel qu'un crochet destiné à traverser la paroi nasale de l'animal.

La partie centrale du corps de l'anneau destinée à être située hors des naseaux de l'animal, lorsque ce dernier porte l'anneau nasal, est creuse pour loger plusieurs capteurs.

Cette partie centrale reçoit ainsi un capteur d'humidité 14 débouchant sur l'extérieur et permettant de déterminer le niveau d'humidité environnant immédiatement cette partie de l'anneau.

Elle comporte en plus une sonde de mesure de conductivité électrique 15 pour détecter une variation de la conductivité entre deux électrodes espacées l'une de l'autre. Cette variation résulte de la présence de l'eau venant combler l'espace séparant les deux électrodes.

La combinaison des informations fournies par ces deux capteurs 14, 15 permet de détecter l'immersion de cette partie d'anneau nasal 10 dans l'eau ou la présence d'eau au-delà d'une valeur seuil à l'extérieur du museau et au niveau de l'extrémité du museau, ou mufle, de cet animal pour identifier une prise de nourriture ou d'eau.

Un capteur de mouvement tel qu'un accéléromètre 16 est aussi placé à l'intérieur du corps principal 11 de l'anneau pour permettre d'obtenir des données de mouvement de la tête de l'animal. Il est ainsi possible de déterminer lorsque l'animal baisse sa tête pour s'abreuver ou manger.

Le corps principal 11 de l'anneau est également pourvu d'une étiquette NFC 17 pour réaliser des communications sans fil avec un lecteur de communication en champ proche (NFC) permettant ainsi de localiser l'animal par rapport à un abreuvoir, ou une mangeoire, équipés de tels lecteurs.

De préférence, l'anneau comporte encore un capteur GPS 18 permettant d'identifier le comportement de l'animal, notamment si ce dernier est immobile. En combinant cette information avec celle provenant de l'accéléromètre, il est alors possible d'en déduire si l'animal est au repos, par exemple, s'il dort.

Cet anneau nasal est également configuré pour délivrer des composés actifs tels que des médicaments, des vitamines, ...

## Revendications

1. Procédé de surveillance de l'alimentation et de la consommation en eau d'un bovin tel qu'une vache, **caractérisé en ce qu'**au moyen d'au moins un capteur transporté par ledit bovin, détecter la présence d'eau et/ou de nourriture dans une zone située au niveau du museau de cet animal et extérieure au corps de cet animal, pour identifier une prise de nourriture ou d'eau par ce bovin.

2. Procédé selon la revendication 1, **caractérisé en ce que** ledit au moins un capteur comprenant un capteur radar, on réalise les étapes suivantes :
- émettre un signal de radar au moins dans ladite zone,
- recevoir au moins une réflexion du signal de radar provenant d'un objet situé dans ladite zone pour obtenir des données dudit au moins un objet, et
- traiter lesdites données pour déterminer la présence d'eau ou de nourriture dans ladite zone.

3. Procédé selon la revendication 1 ou 2, **caractérisé en ce qu'**une antenne d'émission configurée pour émettre un signal de radar à bande ultralarge émet un signal de radar dans ladite zone.

4. Procédé selon la revendication 2 ou 3, **caractérisé en ce que** ledit signal de radar est émis sous forme d'impulsions cohérentes.

5. Procédé selon l'une quelconque des revendications 1 à 4, **caractérisé en ce que** ledit bovin portant un anneau nasal (10) comportant au moins un capteur de détection d'eau (14, 15) placé dans la partie de cet anneau située hors des naseaux de l'animal, détecter avec ledit au moins un capteur, l'immersion de ladite partie d'anneau dans l'eau ou la présence d'eau au-delà d'une valeur seuil au niveau de l'extrémité du museau de cet animal pour identifier une prise de nourriture ou d'eau de ce bovin.

6. Procédé selon la revendication 5, **caractérisé en ce qu'**on réalise une ou plusieurs mesures choisies dans le groupe comprenant une mesure de la pression ambiante s'appliquant sur ladite partie de l'anneau, une mesure du niveau d'humidité à proximité de ladite partie de l'anneau, une mesure de conductivité électrique pour détecter une variation de la conductivité entre deux électrodes espacées l'une de l'autre, une mesure de capacité de l'espace séparant deux électrodes pour détecter une variation de la capacité de cet espace liée à la présence de l'eau, et une mesure de détection optique de l'eau

7. Procédé selon la revendication 5 ou 6, **caractérisé en ce que** ladite valeur seuil est définie pour éliminer des mesures liées à l'état physiologique naturel de l'animal tel que l'humidité naturelle de l'extrémité du museau de l'animal et/ou d'éventuelles fausses mesures liées aux conditions atmosphériques environnant l'animal telles que la pluie ou du brouillard.

8. Procédé selon l'une quelconque des revendications 1 à 7, **caractérisé en ce qu'**on détecte également la localisation de l'animal à proximité d'un abreuvoir et/ou d'une mangeoire.

9. Procédé selon l'une quelconque des revendications 1 à 8, **caractérisé en ce qu'**on détecte un mouvement de la tête de l'animal.

10. Procédé selon les revendications 8 et 9, **caractérisé en ce qu'**on associe les informations liées à la présence de l'animal à proximité d'un abreuvoir et/ou d'une mangeoire ainsi qu'un abaissement de la tête de l'animal pour déclencher la ou les mesures avec ledit capteur radar et/ou ledit au moins un capteur de détection d'eau (14, 15).

11. Procédé selon l'une quelconque des revendications 1 à 7 et 8 et/ou 9, **caractérisé en ce que** ledit capteur radar et/ou ledit au moins un capteur de détection d'eau (14, 15) présentant un mode de veille de consommation de faible énergie, chaque capteur est placé dans ce mode lorsqu'il apparaît que l'animal est au repos ou n'est pas localisé à proximité d'un abreuvoir et/ou d'une mangeoire ou encore que la tête de cet animal ne soit pas baissée vers le sol.

12. Procédé selon l'une quelconque des revendications précédentes, **caractérisé en ce qu'**on détecte les mouvements du museau de l'animal pour identifier une mastication d'aliments par ce dernier.

13. Procédé selon l'une quelconque des revendications précédentes, **caractérisé en ce qu'**on acquiert les mesures fournies par ledit capteur radar et/ou ledit au moins un capteur de détection d'eau (14, 15) dans le temps pour déterminer une durée de consommation en eau ou d'alimentation de cet animal.

14. Procédé selon l'une quelconque des revendications précédentes, **caractérisé en ce que** lesdites mesures sont traitées par une unité centrale telle qu'un microprocesseur, portée par l'animal ou sont envoyées par un protocole de communication sans fil vers une unité centrale distante.

15. Procédé selon l'une quelconque des revendications précédentes, **caractérisé en ce qu'**on délivre également avec ledit anneau nasal (10) des composés actifs tels que des médicaments, des vitamines, ...

16. Dispositif de surveillance de l'alimentation et de la consommation en eau d'un bovin tel qu'une vache, **caractérisé en ce qu'**il est portatif et comporte :
- un capteur radar comprenant au moins :
- une antenne d'émission disposée en une première position et configurée pour émettre un signal radar dans une zone externe au corps de l'animal,
- une antenne de réception disposée en une seconde position distincte et espacée de la première position, ladite antenne de réception étant configurée pour recevoir les signaux réfléchis par un ou plusieurs objets placés dans la zone, et/ou
- un capteur de détection d'eau (14, 15) agencé pour être placé à l'extérieur du corps de l'animal lorsque ce dernier porte ledit dispositif de surveillance, ce capteur de détection d'eau (14, 15) étant configuré pour détecter l'immersion au moins partielle du dispositif de surveillance dans l'eau ou la présence d'eau au-delà d'une valeur seuil à l'extérieur du corps de cet animal et au niveau de l'extrémité de son museau, et
- une unité de traitement pour identifier à partir des mesures prises par ledit capteur radar et/ou ledit au moins un capteur de détection d'eau (14, 15), une prise de nourriture ou d'eau par ce bovin.

17. Dispositif de surveillance selon la revendication 16, **caractérisé en ce que** ledit capteur radar est placé dans un anneau nasal (10), un collier ou une étiquette auriculaire.

18. Dispositif de surveillance selon la revendication 16 ou 17, **caractérisé en ce que** ladite antenne d'émission est configurée pour émettre un signal de radar à bande ultralarge.

19. Dispositif de surveillance selon l'une quelconque des revendications 16 à 18, **caractérisé en ce que** ledit dispositif étant un anneau nasal (10), ledit au moins un capteur de détection d'eau (14, 15) est placé dans la partie de cet anneau destinée à être située hors des naseaux de l'animal lorsque ce dernier porte cet anneau nasal (10), ledit au moins un capteur de détection d'eau (14, 15) étant configuré pour détecter l'immersion de ladite partie d'anneau dans l'eau ou la présence d'eau au-delà d'une valeur seuil à l'extérieur du corps de cet animal et au niveau de l'extrémité de son museau pour identifier une prise de nourriture ou d'eau de ce bovin.

20. Dispositif de surveillance selon la revendication 19, **caractérisé en ce que** ledit anneau nasal (10) est configuré pour délivrer des composés actifs tels que des médicaments, des vitamines, des hormones ....

21. Dispositif selon l'une quelconque des revendications 16 à 20, **caractérisé en ce que** le ou les capteurs de détection de présence d'eau sont choisis dans le groupe comprenant une jauge de pression, un capteur d'humidité, une sonde de mesure de conductivité électrique pour détecter une variation de la conductivité entre deux électrodes espacées l'une de l'autre, une sonde de mesure de capacité de l'espace séparant deux électrodes pour détecter une variation de la capacité de cet espace et un capteur optique pour détecter la présence d'eau sur ou dans ladite partie d'anneau.

22. Dispositif selon l'une quelconque des revendications précédentes, **caractérisé en ce qu'**il comporte également un accéléromètre (16) et/ou gyroscope et/ou un dispositif de localisation (17) de ce dispositif de surveillance à proximité d'un abreuvoir ou d'une mangeoire.
